# FASCICULE DE BREVET EUROPEEN

(11) **EP 0 341 159 B1**
(45) Date de publication et mention de la délivrance du brevet: **04.08.1993**
(21) Numéro de dépôt: 89401265.7
(22) Date de dépôt: 03.05.1989
(51) Int. Cl.: H02H 7/16, H01G 9/00

(54) **Accumulateur d'énergie électrique de type capacitif, de grande capacité**
Elektrischer Kapazitiver Energiespeicher mit grosser Kapazität
Electrical energy accumulator of the capacitive type with high capacity

(30) Priorité: 06.05.1988 FR 8806162
(43) Date de publication de la demande: 08.11.1989
(73) Titulaire: CSEE-DEFENSE, F-75017 Paris (FR); GIAT Industries, F-78034 Versailles Cédex (FR)
(72) Inventeur: Kaitandjian, Michel, F-78150 Le Chesnay (FR); Pradat, Philippe, F-91940 Les Ulis (FR)
(74) Mandataire: Chauchard, Robert

(56) Documents cités:
- EP-A- 0 244 281
- FR-A- 606 801
- US-A- 4 347 539

## Description

La présente invention concerne un accumulateur d'énergie électrique de type capacitif, de grande capacité, comprenant une pluralité de condensateurs électrochimiques connectés en parallèle, un circuit de détection de surtension et un circuit de décharge pour décharger les condensateurs dans des shunts de dissipation thermique dès qu'une surtension anormale est détectée.

Un tel accumulateur d'énergie électrique est applicable notamment à un système de commande électrique, avec récupération d'énergie, de la tourelle d'un char de combat.

Dans cette application, on a besoin d'un accumulateur de grande capacité, ce qui pose à la fois des problèmes d'encombrement et des problèmes de sécurité pour les utilisateurs. On sait en effet que les candensateurs sont susceptibles d'exploser lorsqu'ils sont soumis à une tension supérieure à leur tension nominale. Or, les effets d'une telle explosion sont évidemment d'autant plus importants que la capacité est plus grande. Il en est naturellement de même en ce qui concerne les risques d'électrocution.

Le brevet FR-A-606 801 décrit un accumulateur d'énergie électrique de type capacitif comportant, pour chaque condensateur, un circuit de détection de surtension et de décharge dans un shunt de dissipation thermique. De plus, rien n'est prévu pour éviter les risques d'électrocution.

Quant au document EP-A-244 281, il décrit également un condensateur équipé d'un dispositif de protection individuelle. De plus, la mise hors circuit du condensateur s'effectue sous l'action d'une augmentation de pression, ce qui implique que le condensateur est déjà détruit.

La présente invention a donc pour but principal de réaliser un accumulateur de grande capacité qui présente en même temps une grande sécurité d'emploi.

A cet effet, l'accumulateur selon l'invention est essentiellement caractérisé en ce que la pluralité de condensateurs électrochimiques est disposée à l'intérieur d'un même boîtier comportant le circuit de détection et un circuit de commande de décharge auquel boîtier sont intégrés les shunts de dissipation thermique, et en ce que ce boîtier est constitué d'un réceptacle muni d'un couvercle et comporte un dispositif de détection de l'ouverture du couvercle déclenchant automatiquement la décharge des condensateurs.

Grâce à ces dispositions, on obtient un accumulateur de grande capacité qui présente également une grande sécurité d'emploi. On notera en particulier que comme les condensateurs sont enfermés dans un boîtier, les risques d'électrocution sont très limités.

De préférence, les condensateurs sont répartis à l'intérieur de chaque boîtier en plusieurs batteries associées chacune à un fusible. De préférence également, un détecteur d'avarie est prévu afin de permettre de localiser la batterie de condensateurs défaillante.

Ainsi, en cas de court-circuit sur l'un des condensateurs, le fusible est détruit et isole la batterie correspondante, ce qui ne met pas en péril le bon fonctionnement de l'ensemble. Par ailleurs, la batterie défaillante se trouve localisée et peut ensuite être réparée dès que les conditions d'utilisation le permettent.

De plus, le boîtier est réalisé sous la forme d'un secteur circulaire susceptible d'être accolé à d'autres boîtiers identiques pour constituer une couronne au moins partielle.

Une telle disposition s'avère en effet particulièrement interessante dans le cas où l'accumulateur doit venir se loger dans la tourelle d'un char de combat.

Une forme d'exécution de l'invention est décrite ci-après à titre d'exemple, en référence aux dessins annexés dans lesquels :
- la figure 1 est un schéma partiellement synoptique d'un accumulateur capacitif conforme à l'invention ; et
- la figure 2 est une vue simplifiée en perspective représentant l'organisation matérielle d'un tel accumulateur.

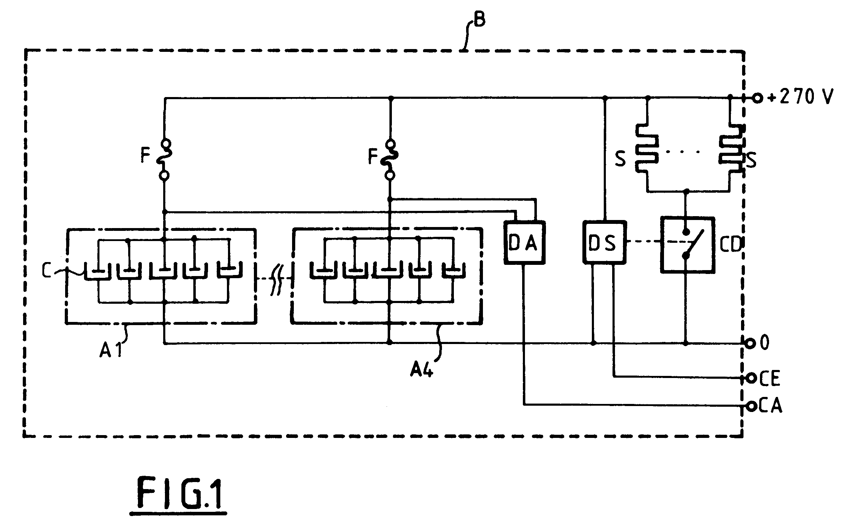

L'accumulateur capacitif représenté sur la figure 1 a une capacité relativement importante de l'ordre de 0,25 Farad et il est essentiellement constitué par la mise en parallèle de 20 condensateurs électrochimiques C de 12.500 µF chacun.

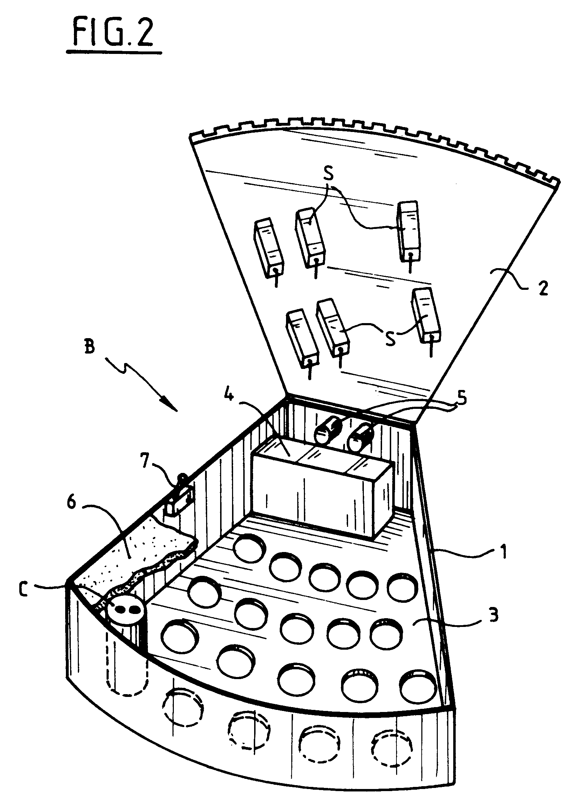

Conformément à l'invention, tous ces condensateurs sont disposés à l'intérieur d'un même boîtier B, représenté sur la figure 2, qui est équipé d'un circuit de détection de surtension DS commandant un commutateur de décharge CD connecté en série avec des shunts de dissipation thermique S intégrés au boîtier. Les condensateurs sont normalement soumis à une tension nominale de l'ordre de 270 volts et lorsqu'une surtension anormale est détectée par le circuit DS, le commutateur CD se ferme et provoque la décharge immédiate des condensateurs dans les shunts S en un temps inférieur à 2 secondes. Le détecteur de surtension DS est également pourvu d'une commande extérieure au boîtier CE permettant de provoquer volontairement la décharge des condensateurs en dehors des périodes d'utilisation du système.

Selon une autre caractéristique de l'invention, les condensateurs C sont répartis à l'intérieur du boîtier B en quatre batteries identiques A₁ ...A₄ de cinq condensateurs, associées chacune à un fusible F. Ainsi, lorsqu'une avarie de type court-circuit apparaît sur l'un des condensateurs, il provoque la destruction du fusible de la batterie correspondante. La batterie défaillante se trouve alors isolée, ce qui n'empêche pas les autres batteries de fonctionner normalement.

Un détecteur d'avarie DA est en outre prévu, avec une connexion vers l'extérieur CA permettant de localiser le boîtier dans lequel se trouve la batterie défaillante, en vue de procéder à sa réfection dès que les conditions d'utilisation le permettent.

On va maintenant décrire l'organisation matérielle d'un tel accumulateur capacitif, en se référant plus particulièrement à la figure 2.

Ainsi qu'on peut le voir sur cette figure, le boîtier B est essentiellement constitué par un réceptacle 1 en forme de secteur circulaire, d'environ 60° d'angle au sommet, obturé de façon étanche par un couvercle 2. Les condensateurs C sont disposés debout et en quinconce sur une plaque de fond alvéolée 3, réalisée par exemple en Téflon, en quatre rangées successives correspondant respectivement aux quatre batteries A₁ à A₄.

Au niveau de l'angle au sommet, prévu tronqué, se trouve un bloc électronique 4 renfermant le détecteur de surtension DS, le commutateur de décharge CD et le détecteur d'avarie DA. Juste au-dessus se trouvent des connecteurs 5 permettant d'assurer les connexions avec l'extérieur du bloc électronique 4 et des condensateurs C. L'ensemble est recouvert d'un bloc de mousse 6 assurant le maintien des condensateurs dans les alvéoles de la plaque de fond 3.

Les shunts S sont fixés sur la face interne du couvercle 2 dont la face externe des rainurée afin de constituer un radiateur thermique. Par ailleurs, un contacteur 7 est placé à l'intérieur du réceptacle 1 de façon à être sollicité par le couvercle 2 en position de fermeture. Ainsi, lorsque le couvercle est ouvert pour une raison quelconque, le contacteur 7 est actionné et provoque alors automatiquement la décharge des condensateurs dans les shunts S, afin d'éviter tout risque d'électrocution.

Grâce à cet ensemble de dispositions, l'accumulateur capacitif selon l'invention présente à la fois une grande sécurité d'emploi et une grande disponibilité opérationnelle du fait de son organisation cellulaire. Dans l'application particulière envisagée ici, à savoir la motorisation électrique de la tourelle d'un char de combat, on a en fait besoin d'un accumulateur ayant une grande capacité de l'ordre de 1 Farad. Il faut alors associer plusieurs boîtiers tels que celui qui vient d'être décrit, et la forme particulière de ces boîtiers permet de réaliser, par juxtaposition, des couronnes partielles qui s'intègrent parfaitement dans la tourelle d'un char.

## Revendications

1. Accumulateur d'énergie électrique de type capacitif, de grande capacité, comprenant une pluralité de condensateurs électrochimiques (C) correctés en parallèle, un circuit de détection de surtension (DS) et un circuit de décharge (CD, S) pour décharger les condensateurs dans des shunts (S) de dissipation thermique dès qu'une surtension anormale est détectée, caractérisé en ce que la pluralité de condensateurs électrochimiques (C) est disposée à l'intérieur d'un même boîtier (B) comportant le circuit de détection (DS) et un circuit de commande de décharge (CD) auquel boîtier sont intégrés les shunts de dissipation thermique (S), et en ce que ce boîtier (B) est constitué d'un réceptacle (1) muni d'un couvercle (2) et comporte un dispositif de détection (7) de l'ouverture du couvercle (2) déclenchant automatiquement la décharge des condensateurs (C).

2. Accumulateur d'énergie électrique selon la revendication 1, caractérisé en ce que les condensateurs (C) sont répartis à l'intérieur de chaque boîtier en plusieurs batteries (A₁... A₄) associées chacune à un fusible (F).

3. Accumulateur d'énergie électrique selon la revendication 2, caractérisé en ce qu'il comprend un détecteur d'avarie (DA) permettant de localiser la batterie défaillante.

4. Accumulateur d'énergie électrique selon l'une quelconque des revendications 1 à 3, caractérisé en ce que le boîtier (B) est réalisé sous la forme d'un secteur circulaire susceptible d'être accolé à d'autres boîtiers identiques pour constituer une couronne au moins partielle.

## Patentansprüche

1. Elektrischer kapazitiver Energiespeicher mit großer Kapazität, enthaltend eine Vielzahl parallelgeschalteter elektrochemischer Kondensatoren (C), einen Überspannungs-Überwachungskreis (DS) und einen Entladungskreis (CD, S), um die Kondensatoren in Wärmeabstrahlungs-Shunts (S) zu entladen, sowie eine anormale Überspannung festgestellt wird,
dadurch **gekennzeichnet,**
daß die Vielzahl elektrochemischer Kondenstoren (C) im Inneren desselben Gehäuses (B) untergebracht ist, das den Überwachungskreis (DS) und einen Entladungssteuerkreis (CD) enthält und in das die Wärmeabstrahlungs-Shunts (S) integriert sind, und dadurch, daß dieses Gehäuse gebildet wird durch einen Behälter (1), versehen mit einem Deckel (2), und eine Überwachungseinrichtung (7) für die Öffung des Deckels (2) umfaßt, die automatisch die Entladung der Kondensatoren (C) auslöst.

2. Elektrischer Energiespeicher nach Anspruch 1, dadurch gekennzeichnet, daß die Kondensatoren (C) im Inneren eines jeden Gehäuses auf mehrere Batterien verteilt sind (A₁...A₄), wobei jede einer Sicherung (F) zugeordnet ist.

3. Elektrischer Energiespeicher nach Anspruch 2, dadurch gekennzeichnet, daß er eine Störfalldetektor (DA) enthält, der gestattet, die ausgefallene Batterie zu lokalisieren.

4. Elektrischer Energiespeicher nach einem der Ansprüche 1 bis 3, dadurch gekennzeichnet, daß das Gehäuse (B) ausgeführt ist in der Form eines Kreissektors, geeignet, an weitere identische Gehäuse angefügt zu werden, um einen, wenigstens partiellen Kranz zu bilden.

## Claims

1. An electric energy accumulator of capacitive type, having a high capacity, comprising a plurality of electrochemical capacitors (C) connected in parallel, an overvoltage detection circuit (DS) and a discharge circuit (CD, S) for discharging the capacitors into heat dissipation shunts (S) as soon as an abnormal overvoltage is detected, characterized in that the plurality of electrochemical capacitors (C) are disposed inside the same case (B) comprising the detection circuit (DS) and a dicharge control circuit (CD), said case having the heat dissipation shunts (S) integrated therein, and in that said case (B) is formed of a receptacle (1) fitted with a lid (2) and comprises a device (7) for detecting opening of the lid (2) which automatically triggers off discharge of the capacitors (C).

2. The electric energy accumulator according to claim 1, characterized in that the capacitors (C) are distributed inside each case in a plurality of batteries (A₁...A₄) each associated with a fuse (F).

3. The electric energy accumulator according to claim 2, characterized in that it comprises a breakdown detector (DA) for locating the defective battery.

4. The electric energy accumulator according to any of claims 1 to 3, characterized in that the case (B) is formed as a circular sector, which is positionable side by side with other identical cases so as to form at least a partial ring.
